# FASCICULE DE BREVET EUROPEEN

(11) **EP 3 018 322 B1**
(45) Date de publication et mention de la délivrance du brevet: **28.08.2019**
(21) Numéro de dépôt: 15189968.9
(22) Date de dépôt: 15.10.2015
(51) Int. Cl.: F02C 3/32, F02C 6/02, F02C 6/18, F02C 6/20, F02C 7/32, F02C 6/12, F02C 7/143

(54) **INSTALLATION MOTRICE MUNIE D'UN DISPOSITIF DE REFROIDISSEMENT A DEUX ETAGES DE L'AIR D'ADMISSION D'UN TURBOMOTEUR**
MOTORBETRIEBENE ANLAGE, DIE MIT EINER ZWEISTUFIGEN KÜHLVORRICHTUNG FÜR ANSAUGLUFT EINES TURBOMOTORS AUSGESTATTET IST
A POWER PLANT HAVING A TWO-STAGE COOLER DEVICE FOR COOLING THE ADMISSION AIR FOR A TURBOSHAFT ENGINE

(30) Priorité: 07.11.2014 FR 1402533
(43) Date de publication de la demande: 11.05.2016
(73) Titulaire: Airbus Helicopters, 13725 Marignane Cedex (FR)
(72) Inventeur: POMMÉ, Vincent, 13127 VITROLLES (FR)
(74) Mandataire: GPI & Associés

(56) Documents cités:
- EP-A1- 2 295 765
- US-A- 4 490 989
- US-A1- 2004 011 046

## Description

La présente invention se situe dans le domaine des installations motrices et plus particulièrement des dispositifs d'échange thermique destinés à des installations motrices. La présente invention concerne notamment une installation motrice munie d'un dispositif de refroidissement à deux étages de l'air d'admission d'au moins un moteur thermique de cette installation motrice. La présente invention concerne également un procédé de refroidissement à deux étages de l'air d'admission d'au moins un moteur thermique d'une telle installation motrice.

Cette installation motrice est particulièrement destinée à équiper un aéronef à voilure tournante et permet le refroidissement de l'air d'admission d'au moins une turbine à gaz de cette installation motrice entre deux étages de compression de cet air d'admission, en amont d'une chambre de combustion de chaque turbine à gaz.

En effet, il est connu que l'augmentation de la pression de l'air d'admission avant son injection dans la chambre de combustion d'un moteur thermique augmente le rendement de ce moteur thermique ainsi que la puissance qu'il peut fournir. Par contre, cette compression de l'air d'admission s'accompagne d'une augmentation de sa température et, par suite, d'une diminution de sa masse volumique. Le refroidissement de cet air d'admission après sa compression permet de nouveau d'améliorer l'efficacité du moteur thermique et d'augmenter son rendement et la puissance fournie.

Par exemple, sur les moteurs thermiques utilisés en automobile, un échangeur air-air est souvent utilisé pour refroidir l'air d'admission en sortie d'un turbocompresseur et avant son entrée dans la chambre de combustion de ce moteur thermique.

De même, de manière connue dans le domaine des turbomoteurs, un échangeur air-air peut être utilisé pour refroidir l'air d'admission en sortie d'un étage intermédiaire d'un compresseur avant qu'il soit réinjecté dans l'étage suivant de ce compresseur, en amont de la chambre de combustion du turbomoteur.

Dans ces deux exemples, le refroidissement de l'air d'admission permet d'avoir à la fin de la phase de compression un air d'admission à une température plus faible permettant d'accroitre la puissance fournie par le moteur thermique ou bien le turbomoteur. Ce type d'échangeur permettant de refroidir de l'air est généralement désigné par le terme « intercooler » en langue anglaise. Un tel intercooler est souvent un échangeur air-air, mais peut également être un échangeur air-liquide.

On connait en outre le document US8813503 qui décrit une méthode et un système de gestion de la température de refroidissement de l'air d'admission d'un turbomoteur dans le but de limiter la condensation de cet air d'admission lors de son passage dans un intercooler situé entre deux étages de compression d'une turbine à gaz. Ce système contrôle notamment la température de l'air dans un refroidisseur de l'air d'admission situé en amont des deux étages de compression et de l'intercooler.

Par contre, l'utilisation d'un tel intercooler à bord d'un aéronef à voilure tournante dans le but d'augmenter la puissance fournie par le ou les turbomoteurs de cet aéronef est difficile et, par suite, non appliquée aujourd'hui.

Tout d'abord, l'intégration d'un intercooler, qui est habituellement un échangeur air/air, au voisinage du turbomoteur d'un aéronef et en particulier à proximité de la zone de ses compresseurs est difficile. En effet, les dimensions de l'intercooler peuvent être importantes pour avoir un gain de puissance intéressant du turbomoteur obtenu grâce à cet intercooler. Ses dimensions sont alors peu favorables à l'implantation de l'intercooler dans un aéronef.

De plus, la masse de l'intercooler peut également être importante et le rapport entre le gain de puissance obtenu et l'augmentation de la masse de l'aéronef est réduit, voire proche de zéro.

De fait, les dimensions de l'intercooler doivent être limitées afin que cet intercooler puisse être implanté dans un aéronef à voilure tournante. Mais l'accroissement de la puissance du turbomoteur de l'aéronef est alors faible et l'intérêt de cette implantation est alors limité.

Enfin, il s'avère généralement complexe, lors de son implantation dans un aéronef à voilure tournante, d'acheminer de l'air de refroidissement au niveau de cet intercooler, ce qui peut limiter son efficacité et, par suite, le gain de puissance obtenu au niveau du turbomoteur de l'aéronef.

Par ailleurs, un intercooler et, de manière générale, un échangeur thermique sont des machines thermiques utilisant une seule source de chaleur. Cette source de chaleur est généralement l'air ambiant dans le cas d'un échangeur air/air. On peut alors parler de machine thermique « monotherme ». Ces machines thermiques monothermes se limitent à un échange thermique entre deux fluides.

Ils existent également des machines thermiques utilisant plusieurs sources thermiques. De telles machines thermiques sont capables de convertir, lorsqu'elles sont motrices, de l'énergie thermique en énergie mécanique ou bien, lorsqu'elles sont réceptrices, de l'énergie mécanique en énergie thermique. De telles machines thermiques utilisent un fluide qui subit des transformations cycliques au cours desquelles ce fluide échange avec l'extérieur de l'énergie sous forme de travail et avec les sources thermiques de l'énergie sous forme de chaleur.

On connait des machines thermiques « dithermes », c'est-à-dire utilisant deux sources thermiques de températures différentes, tel qu'un moteur thermique à explosion, une centrale vapeur ou bien un machine frigorifique.

On connait également des machines thermiques « trithermes », c'est-à-dire utilisant trois sources thermiques. De telles machines thermiques trithermes sont notamment utilisées en tant que machines frigorifiques selon le cycle frigorifique à éjecteur connu.

Un tel cycle frigorifique à éjecteur se présente comme suit :
- en sortie d'un condenseur, un fluide frigorifique sous forme liquide est dirigé d'une part vers une boucle motrice et d'autre part vers une boucle frigorifique,
- la boucle motrice comporte une pompe qui comprime une première partie du fluide frigorifique et un premier évaporateur dans lequel cette première partie du fluide frigorifique est transformée sous forme gazeuse,
- la boucle frigorifique comporte un détendeur qui détend une seconde partie du fluide frigorifique et un second évaporateur dans lequel cette seconde partie du fluide frigorifique est transformée sous forme gazeuse,
- la première partie du fluide frigorifique est ensuite utilisée comme fluide frigorifique moteur dans un éjecteur permettant d'une part de comprimer et d'entrainer la seconde partie du fluide frigorifique et d'autre part de mélanger les deux parties du fluide frigorifique avant leur entrée dans le condenseur afin transformer ce fluide frigorifique sous forme liquide, le cycle étant ainsi bouclé.

Les trois sources thermiques sont utilisées respectivement au niveau des deux évaporateurs et du condenseur pour échanger de l'énergie thermique avec le fluide frigorifique.

Ces machines thermiques, qu'elles soient dithermes ou bien trithermes, utilisent des cycles thermodynamiques tels que le cycle de « Carnot » ou encore le cycle de « Rankine ».

Le cycle de Rankine est un cycle thermodynamique qui se rapproche du cycle de Carnot. Il s'en distingue par la substitution des deux transformations isothermes du cycle de Carnot par deux transformations isobares. Le cycle est ainsi composé successivement de quatre transformations : une compression adiabatique, une vaporisation isobare, une détente adiabatique et une liquéfaction isobare.

Les applications industrielles du cycle de Rankine sont par exemple des systèmes utilisant la chaleur perdue par des procédés industriels afin de fournir une alimentation électrique supplémentaire. Le cycle Rankine est notamment utilisé dans les centrales à vapeur y compris celles équipant les centrales nucléaires.

Le cycle de Rankine est également utilisé avec des fluides organiques dont la température de vaporisation est inférieure à celle de l'eau. Les températures des sources de chaleur utilisées avec ce cycle de Rankine peuvent alors être réduites.

Par exemple, le document US8438849 décrit un système de récupération de chaleur utilisant deux sources de chaleur et comprenant une turbine haute pression et une turbine basse pression. Ces deux turbines fonctionnent selon le cycle de Rankine et permettent de générer une énergie mécanique transformée ensuite en électricité.

On connait également le document US2010/0242479 qui décrit un système de récupération d'énergie utilisant au moins deux sources de chaleur de températures différentes et plusieurs cycles de Rankine en cascade. Ce système de récupération d'énergie permet de générer d'une part de l'énergie mécanique transformable en électricité et d'autre part de l'énergie thermique afin de refroidir et/ou de chauffer un fluide complémentaire au travers d'un ou plusieurs échangeurs.

Par ailleurs, une machine à absorption peut également être utilisée pour refroidir l'air d'admission d'un moteur thermique entre deux étages de compression de cet air d'admission comme décrit dans le document EP 2295765. Cette machine à absorption comporte notamment deux évaporateurs, deux condenseurs, une pompe et deux détendeurs. Cette machine à absorption utilise de l'ammoniac (NH3) ou bien du bromure de lithium (LiBr) qui ont le désavantage d'être des fluides avec une toxicité importante. Toutefois, une telle machine à absorption est généralement de dimensions importantes, son encombrement et sa masse sont alors incompatibles avec les contraintes d'intégration exigées par un aéronef. De plus, le fonctionnement d'une machine à absorption, nécessite une implantation fixe, en particulier pour l'absorption du réfrigérant par l'absorbant. Cette exigence est rédhibitoire pour une intégration dans un véhicule mobile.

Enfin, le document US 4490989 décrit un système d'air conditionné et de chauffage d'une cabine d'un aéronef utilisant une machine thermique comportant un évaporateur, un condenseur et un compresseur dans lesquels circule un fluide réfrigérant. La cabine de l'aéronef peut être alimentée par de l'air refroidi sortant de l'évaporateur ou bien par de l'air extérieur à l'aéronef réchauffé par les gaz d'échappement d'un moteur thermique de l'aéronef.

La présente invention a alors pour objet de proposer un dispositif permettant de s'affranchir des limitations mentionnées ci-dessus, ce dispositif permettant de rendre possible et intéressante l'intégration du principe d'un intercooler à bord d'un aéronef à voilure tournante afin d'obtenir un gain de puissance.

Selon l'invention, une installation motrice, telle que revendiquée dans revendication 1, comporte au moins un compresseur et au moins un moteur thermique ainsi qu'un dispositif de refroidissement de l'air d'admission de chaque moteur thermique, chaque moteur thermique étant muni d'une chambre de combustion. Chaque compresseur comporte au moins deux étages de compression afin de comprimer l'air d'admission avant son injection dans la chambre de combustion de chaque moteur thermique.

Ce dispositif de refroidissement est remarquable en ce qu'il forme une machine thermique tritherme comportant notamment un fluide frigorifique, des premières conduites et deux évaporateurs. Une première conduite relie un premier étage de compression d'un compresseur à un premier évaporateur de ce dispositif de refroidissement. Des premières conduites relient également le premier évaporateur à un second évaporateur de ce dispositif de refroidissement ainsi que ce second évaporateur à un second étage de compression du compresseur. L'air d'admission circule alors dans les premières conduites et successivement dans les deux évaporateurs de ce dispositif de refroidissement afin d'une part de vaporiser le fluide frigorifique et d'autre part de refroidir l'air d'admission entre les deux étages de compression.

Le fluide frigorifique utilisé par ce dispositif de refroidissement peut être un fluide halogéné de type HFC (Hydrofluorocarbure), connu par exemple sous une référence R134a, R1234, R245. Un tel fluide halogéné présente des caractéristiques de toxicité compatibles avec une utilisation pour des véhicules mobiles ainsi que des caractéristiques environnementales également compatibles avec les normes actuelles et à venir connues. Son utilisation dans des véhicules et dans les aéronefs en particulier est donc autorisée.

D'autres fluides frigorifiques peuvent être également utilisés, tels que l'ammoniac, mais ne présentent pas des caractéristiques de toxicité et environnementales satisfaisantes. La toxicité des fluides halogénés de type HFC est notamment plus faible que celle de l'ammoniac ou bien le bromure de lithium.

Le système de refroidissement est ainsi composé de deux échangeurs thermiques de type évaporateurs dans lesquels circulent l'air d'admission du moteur thermique et le fluide frigorifique. Le fluide frigorifique est mis en circulation au moyen d'une machine thermique tritherme dont le principe est connu dans l'état de l'art, l'air d'admission étant mis en circulation par le premier étage de compression d'un compresseur de l'installation motrice.

Le premier évaporateur du dispositif de refroidissement constitue ainsi un premier étage de refroidissement de l'air d'admission du moteur thermique et le second évaporateur complète le refroidissement de cet air d'admission, constituant un second étage de refroidissement de l'air d'admission. Ce refroidissement permet de refroidir l'air d'admission avant son entrée dans le second étage de compression et, par suite, d'avoir en fin de phase de compression un air d'admission entrant dans la chambre de combustion du moteur thermique à une température plus faible ce qui permet d'augmenter de façon significative la puissance délivrée par le moteur thermique.

Le premier et le second évaporateurs du dispositif de refroidissement servent également de générateurs de gaz du fluide frigorifique, transformant ce fluide frigorifique d'une phase liquide vers une phase gazeuse.

Avantageusement, l'utilisation d'un dispositif de refroidissement constitué par une machine thermique tritherme permet de remplacer le travail consommé généralement par un compresseur d'une part par un travail beaucoup plus faible et consommé par une pompe, et d'autre part par une chaleur fournie aux évaporateurs à moyenne ou haute température.

De fait, le dispositif de refroidissement consomme moins d'énergie pour refroidir l'air d'admission et augmenter par la suite la puissance délivrée par le moteur thermique. En conséquence, le bilan de la puissance consommée par le dispositif de refroidissement et de la puissance supplémentaire délivrée par le moteur thermique est positif et favorable à l'implantation d'un tel dispositif de refroidissement au sein d'une installation motrice destinée notamment à équiper un aéronef à voilure tournante.

Le dispositif de refroidissement étant une machine thermique tritherme comporte également une pompe, un détendeur, un moyen de compression et d'entrainement, un condenseur et des secondes conduites. Des secondes conduites relient tout d'abord le condenseur à la pompe, la pompe au premier évaporateur et le premier évaporateur au moyen de compression et d'entrainement. Des secondes conduites relient également le condenseur au détendeur, le détendeur au second évaporateur et le second évaporateur au moyen de compression et d'entrainement. Enfin, une seconde conduite relie le moyen de compression et d'entrainement au condenseur.

Le fluide frigorifique circule ainsi dans les secondes conduites et traverse les composants de ce dispositif de refroidissement.

Le condenseur transforme une première phase gazeuse du fluide frigorifique en une phase liquide, en échangeant de l'énergie thermique avec une première source thermique. Ensuite, le fluide frigorifique se sépare en deux parties.

La pompe comprime une première partie du fluide frigorifique, ce fluide frigorifique étant sous forme liquide, augmentant ainsi sa pression. Le premier évaporateur transforme ensuite en une seconde phase gazeuse à haute pression cette première partie du fluide frigorifique, en échangeant de l'énergie thermique avec une seconde source thermique.

Parallèlement, le détendeur transforme une seconde partie du fluide frigorifique, ce fluide frigorifique étant également sous forme liquide, diminuant ainsi sa pression. Le second évaporateur transforme en une troisième phase gazeuse à basse pression cette seconde partie du fluide frigorifique, en échangeant de l'énergie thermique avec une troisième source thermique.

Par la suite et par souci de simplification, on utilisera les expressions « première phase gazeuse », « seconde phase gazeuse » et « troisième phase gazeuse » pour désigner le fluide frigorifique respectivement sous la première phase gazeuse, la seconde phase gazeuse et la troisième phase gazeuse.

Le moyen de compression et d'entrainement comprime et entraine la troisième phase gazeuse à basse pression du fluide frigorifique par l'intermédiaire de la seconde phase gazeuse à haute pression de ce fluide frigorifique. Ce moyen de compression et d'entrainement mélange également la troisième phase gazeuse à basse pression et la seconde phase gazeuse à haute pression du fluide frigorifique afin de former la première phase gazeuse du fluide frigorifique.

Enfin, cette première phase gazeuse du fluide frigorifique circule dans le condenseur afin d'être condensée et de former la phase liquide du fluide frigorifique, redémarrant ensuite un nouveau cycle tritherme.

Ce dispositif de refroidissement comporte ainsi deux boucles, une boucle primaire ou bien motrice et une boucle secondaire ou bien frigorifique.

La boucle primaire comporte la pompe, le premier évaporateur, le moyen de compression et d'entrainement ainsi que le condenseur. Le fluide frigorifique circule à haute pression dans cette boucle primaire, notamment de la pompe jusqu'au moyen de compression et d'entrainement.

La boucle secondaire comporte le détendeur, le second évaporateur, le moyen de compression et d'entrainement ainsi que le condenseur. Le fluide frigorifique circule à basse pression dans cette boucle secondaire, notamment du détendeur jusqu'au moyen de compression et d'entrainement.

Le dispositif de refroidissement fonctionne ainsi en coopérant avec trois sources thermiques. La première source thermique est par exemple l'air ambiant entourant l'installation motrice, cette première source thermique absorbant de l'énergie thermique du fluide frigorifique par l'intermédiaire du condenseur.

La seconde source thermique et la troisième source thermique sont successivement l'air d'admission du moteur thermique et fournissent de l'énergie thermique au fluide frigorifique par l'intermédiaire respectivement du premier et du second évaporateurs. La seconde source thermique est l'air d'admission sortant du premier étage de compression et entrant dans le dispositif de refroidissement intermédiaire alors que la troisième source thermique est l'air d'admission sortant du premier évaporateur.

On peut noter que la troisième source thermique a une température plus faible que la seconde source thermique, l'air d'admission constituant cette troisième source thermique ayant été refroidi en traversant le premier évaporateur.

La boucle primaire fonctionne de préférence, mais non exclusivement, selon le cycle de Rankine. Le cycle de Rankine permet de récupérer une puissance mécanique à partir d'une source de chaleur. Dans le dispositif de refroidissement selon l'invention, cette source de chaleur est la seconde source thermique et la puissance mécanique est ensuite utilisée dans la boucle secondaire afin de comprimer en phase gazeuse une partie du fluide frigorifique.

Ce moyen de compression et d'entrainement est selon un premier mode de réalisation de l'invention un éjecteur dont le principe de fonctionnement est connu. La seconde phase gazeuse à haute pression du fluide frigorifique est accélérée dans une forme convergente-divergente de l'éjecteur, créant ainsi une baisse de pression dans une zone de mélange ce qui a pour effet d'aspirer la troisième phase gazeuse à basse pression de ce fluide frigorifique. Les seconde et troisième phases gazeuses du fluide frigorifique sont alors mélangées. Il en résulte une augmentation de la pression du mélange de ce fluide frigorifique et une baisse de sa vitesse.

Selon un second mode de réalisation de l'invention, le moyen de compression et d'entrainement comporte un détendeur volumétrique relié au premier évaporateur par une seconde conduite et un compresseur volumétrique relié au second évaporateur par une autre seconde conduite. Le détendeur volumétrique et le compresseur volumétrique sont reliés par une seconde conduite au condenseur. Le détendeur volumétrique et le compresseur volumétrique sont également solidaires mécaniquement en rotation, par exemple par l'intermédiaire d'un arbre de liaison.

Le détendeur volumétrique est entrainé en rotation par la seconde phase gazeuse à haute pression du fluide frigorifique sortant du premier évaporateur, cette seconde phase gazeuse à haute pression du fluide frigorifique étant alors détendue dans ce détendeur volumétrique. Le détendeur volumétrique entraine le compresseur volumétrique en rotation par l'intermédiaire de l'arbre de liaison. La troisième phase gazeuse à basse pression du fluide frigorifique sortant du second évaporateur circule dans le compresseur volumétrique qui, par l'intermédiaire de sa rotation, comprime et, par suite, entraine cette troisième phase gazeuse du fluide frigorifique.

La seconde phase gazeuse du fluide frigorifique sort du détendeur volumétrique par une seconde conduite. De même, la troisième phase gazeuse du fluide frigorifique sort du compresseur volumétrique par une seconde conduite. Ces deux secondes conduites se rejoignent pour former une seule seconde conduite permettant ainsi à la seconde phase gazeuse et à la troisième phase gazeuse du fluide frigorifique de se mélanger, puis de circuler vers le condenseur.

Après ce moyen de compression et d'entrainement, la totalité du fluide frigorifique est condensée par échange thermique avec la première source thermique par l'intermédiaire du condenseur. Avantageusement, le condenseur peut être déporté par rapport à la position du moteur thermique permettant ainsi d'en faciliter son intégration sur un aéronef à voilure tournante par exemple et également d'optimiser son efficacité thermique.

Par ailleurs, la puissance mécanique générée par la détente de la seconde phase gazeuse du fluide frigorifique dans le détendeur volumétrique peut être supérieure à la puissance mécanique nécessaire pour la compression et l'entrainement de la troisième phase gazeuse de ce fluide frigorifique. De ce fait, ce surplus de puissance mécanique peut être utilisé par un ou plusieurs systèmes auxiliaires du dispositif de refroidissement.

Dans ce but, le dispositif de refroidissement peut comporter un arbre de transmission mécanique relié mécaniquement en rotation au détendeur volumétrique. Cet arbre de transmission mécanique peut ainsi fournir ce surplus de puissance mécanique nécessaire pour le fonctionnement d'un système auxiliaire.

Le dispositif de refroidissement peut également comporter un moyen d'embrayage solidarisant en rotation le détendeur volumétrique et l'arbre de transmission mécanique. Ainsi, l'arbre de transmission mécanique et le détendeur volumétrique peuvent être solidarisés et désolidarisés en rotation d'une part selon la disponibilité ou non d'un surplus de puissance mécanique et d'autre part suivant le besoin de puissance mécanique du système auxiliaire. Un tel moyen d'embrayage est par exemple un accouplement magnétique. Avantageusement, un tel accouplement magnétique évite l'utilisation d'un arbre de transmission mécanique sortant du moyen de compression et d'entrainement ainsi que de moyens d'étanchéité tels qu'un joint tournant. Le moyen de compression et d'entrainement constitué par ce détendeur volumétrique et ce compresseur volumétrique peut être ainsi étanche et, par suite, plus fiable.

Un système auxiliaire est par exemple un système de ventilation du condenseur afin d'améliorer l'efficacité thermique de ce condenseur.

Il est également possible d'utiliser une partie de la puissance frigorifique du fluide frigorifique pour au moins une fonction complémentaire d'échange thermique. Dans ce but, l'installation motrice comporte au moins une troisième conduite reliée à une seconde conduite située entre le condenseur et la pompe. Le fluide frigorifique peut alors circuler dans cette troisième conduite jusqu'à un système complémentaire d'échange thermique, puis revenir circuler dans une seconde conduite avant la pompe.

Par exemple, l'installation motrice comportant au moins une boîte de transmission principale de puissance, une troisième conduite relie la seconde conduite à la boîte de transmission principale de puissance. Le fluide frigorifique circule dans cette troisième conduite jusqu'à la boîte de transmission principale de puissance afin de la refroidir. Cette puissance frigorifique du fluide frigorifique peut être utilisée dans le cadre d'un refroidissement de secours ou bien d'un refroidissement additionnel en cas de surcharge temporaire de la boîte de transmission principale de puissance.

Selon un autre exemple, l'installation motrice étant destinée à équiper un aéronef à voilure tournante comportant au moins un habitacle et au moins un échangeur thermique destiné à refroidir cet habitacle, une troisième conduite relie la seconde conduite à chaque échangeur thermique. Le fluide frigorifique circule dans cette troisième conduite jusqu'à chaque échangeur thermique permettant de refroidir l'habitacle de l'aéronef. Cette puissance frigorifique du fluide frigorifique peut être utilisée en remplacement d'un dispositif habituel de climatisation de cet habitacle et permet ainsi d'une part un gain de masse grâce à la mise en commun du dispositif de refroidissement de l'air d'admission du moteur thermique et d'autre part une optimisation de la consommation des énergies utilisées sur l'aéronef. En effet, cette fonction de climatisation de l'habitacle est obtenue sans prélèvement d'énergie supplémentaire, le dispositif de refroidissement assurant simultanément deux fonctions de refroidissement.

Selon une même architecture, le fluide frigorifique peut également assurer le refroidissement d'autres équipements d'un aéronef tel que des équipements électroniques et/ou avioniques par exemple.

Par ailleurs, il est également possible d'utiliser une partie de la chaleur évacuée au cours de la transformation de la troisième phase gazeuse du fluide frigorifique en la première phase liquide du fluide frigorifique par l'intermédiaire du condenseur pour au moins une fonction annexe de chauffage. Dans ce but, le condenseur étant un échangeur thermique entre le fluide frigorifique et un fluide secondaire, l'installation motrice comporte une quatrième conduite reliée au condenseur afin de canaliser le fluide secondaire en sortie de ce condenseur. Le fluide secondaire peut alors circuler dans cette quatrième conduite jusqu'à un dispositif annexe afin de transmettre la chaleur absorbée au niveau du condenseur.

Par exemple, l'installation motrice étant destinée à équiper un aéronef à voilure tournante comportant au moins un habitacle, la quatrième conduite permet de canaliser et de diriger le fluide secondaire vers cet habitacle afin de le chauffer. Ce principe de chauffage de l'habitacle de l'aéronef peut être utilisé en remplacement d'un dispositif traditionnel de chauffage de cet habitacle utilisant par exemple une partie de l'air comprimé par le compresseur du moteur thermique et permet ainsi d'éviter une surconsommation en carburant de ce moteur thermique.

Le fluide secondaire peut être l'air ambiant environnant l'installation motrice. Le condenseur est alors un échangeur thermique entre le fluide frigorifique et l'air ambiant, cet air ambiant étant dirigé par la quatrième conduite vers l'habitacle de l'aéronef afin de le réchauffer.

L'installation motrice selon l'invention permet ainsi principalement le refroidissement de l'air d'admission d'un moteur thermique apportant ainsi une augmentation significative de la puissance délivrée par ce moteur thermique. De plus, le condenseur du dispositif de refroidissement de cet air d'admission pouvant notamment être déporté, l'intégration de ce dispositif de refroidissement dans un aéronef à voilure tournante est facilitée tout en optimisant l'efficacité thermique de ce condenseur.

Par ailleurs, l'installation motrice selon l'invention permet, par l'intermédiaire du dispositif de refroidissement, de fournir d'une part une puissance calorifique pour générer des capacités de refroidissement et de chauffage supplémentaires et d'autre part une puissance mécanique complémentaire.

La présente invention a aussi pour objet un procédé de refroidissement de l'air d'admission d'un moteur thermique d'une installation motrice selon la revendication 13. Au cours de ce procédé,
- l'air d'admission du moteur thermique est comprimé dans un compresseur de l'installation motrice munie de deux étages de compression,
- un fluide frigorifique circule dans un dispositif de refroidissement de cet air d'admission du moteur thermique,
- cet air d'admission circule successivement dans deux évaporateurs du dispositif de refroidissement entre les deux étages de compression afin d'une part de vaporiser le fluide frigorifique et d'autre part de refroidir l'air d'admission.

De plus, au cours de ce procédé de refroidissement de l'air d'admission d'un moteur thermique d'une installation motrice,
- on condense le fluide frigorifique par l'intermédiaire d'un condenseur, en échangeant de l'énergie thermique avec une première source thermique,
- on comprime une première partie du fluide frigorifique par l'intermédiaire d'une pompe,
- on vaporise la première partie du fluide frigorifique par l'intermédiaire d'un premier évaporateur, en échangeant de l'énergie thermique avec une seconde source thermique, la seconde source thermique étant l'air d'admission,
- on détend une seconde partie du fluide frigorifique par l'intermédiaire d'un détendeur,
- on vaporise la seconde partie du fluide frigorifique par l'intermédiaire d'un second évaporateur, en échangeant de l'énergie thermique avec une troisième source thermique, la troisième source thermique étant l'air d'admission, et
- on comprime et on entraine la seconde partie du fluide frigorifique par l'intermédiaire de la première partie du fluide frigorifique, puis on mélange la seconde partie du fluide frigorifique et la première partie du fluide frigorifique.

Selon un premier mode de réalisation de ce procédé, on comprime et on entraine la seconde partie du fluide frigorifique par l'intermédiaire de la première partie du fluide frigorifique et on mélange la seconde partie du fluide frigorifique et la première partie du fluide frigorifique grâce à un éjecteur.

Selon un second mode de réalisation de ce procédé, on comprime et on entraine la seconde partie du fluide frigorifique par l'intermédiaire de la première partie du fluide frigorifique grâce à un détendeur volumétrique et un compresseur volumétrique solidaires mécaniquement en rotation. Le détendeur volumétrique est entrainé en rotation par la première partie du fluide frigorifique et la seconde partie du fluide frigorifique circule dans le compresseur volumétrique. Ensuite, on mélange la seconde partie du fluide frigorifique et la première partie du fluide frigorifique.

En outre, on peut utiliser une partie de l'énergie mécanique disponible au niveau du détendeur volumétrique, le détendeur volumétrique étant relié mécaniquement en rotation à un arbre de transmission mécanique.

Par ailleurs, on peut utiliser la chaleur évacuée au cours de la condensation du fluide frigorifique pour une fonction annexe de chauffage, tel que le chauffage d'un habitacle d'un aéronef.

De plus, on peut utiliser une partie de l'énergie thermique du fluide frigorifique pour au moins une fonction complémentaire d'échange thermique. Par exemple, une partie de l'énergie thermique du fluide frigorifique peut être utilisée pour le refroidissement d'une boîte de transmission principale de puissance de l'installation motrice ou bien le refroidissement d'un habitacle d'un aéronef.

L'invention et ses avantages apparaîtront avec plus de détails dans le cadre de la description qui suit avec des exemples donnés à titre illustratif en référence aux figures annexées qui représentent :
- la figure 1, un aéronef à voilure tournante équipé d'une installation motrice selon l'invention, et
- les figures 2 et 3, deux modes de réalisation de l'installation motrice selon l'invention.

Les éléments présents dans plusieurs figures distinctes sont affectés d'une seule et même référence.

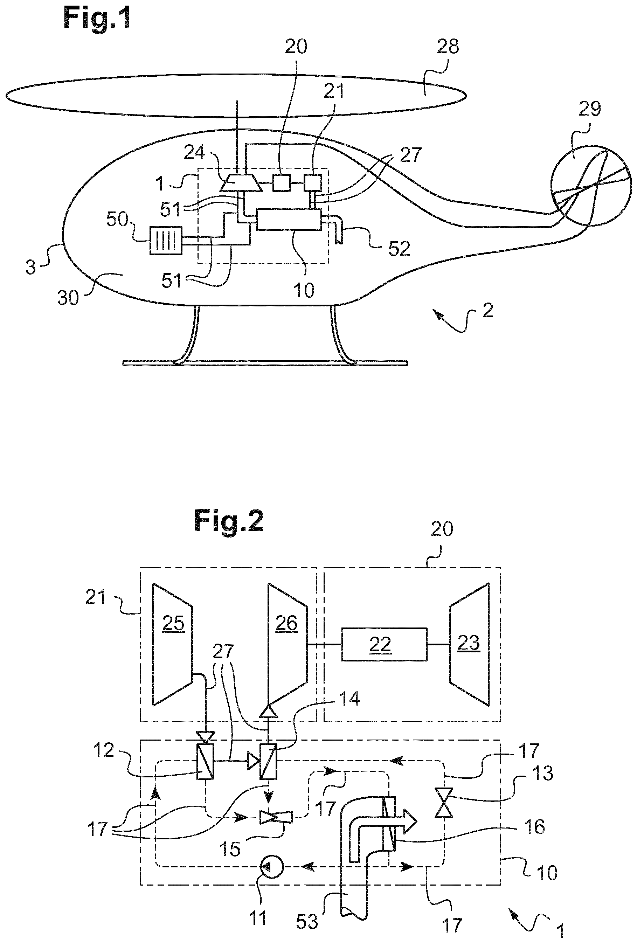

Sur la figure 1, un aéronef 2 à voilure tournante est représenté, cet aéronef 2 comprenant un rotor principal 28 positionné au-dessus d'un fuselage 3 et un rotor arrière 29 anticouple positionné à l'extrémité arrière d'une poutre de queue.

L'aéronef 2 comporte également une installation motrice 1 et un habitacle 30 situé à l'intérieur du fuselage 3.

L'installation motrice 1 comporte un compresseur 21, un moteur thermique 20, une boîte de transmission principale de puissance 24 et un dispositif de refroidissement 10 de l'air d'admission du moteur thermique 20. Le moteur thermique 20 est relié mécaniquement à la boîte de transmission principale de puissance 24 afin de mettre en rotation le rotor principal 28 et le rotor arrière 29.

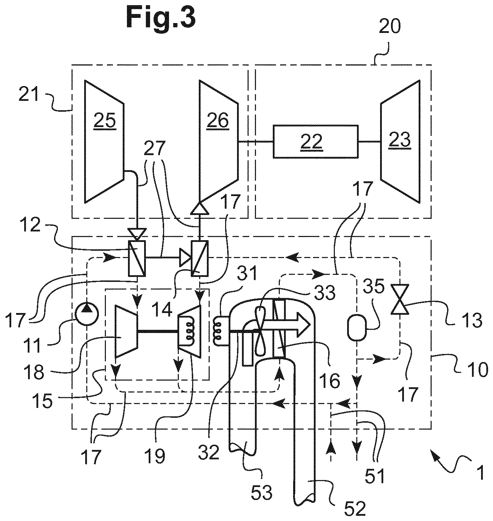

Deux modes de réalisation de l'installation motrice 1 sont représentés respectivement sur les figures 2 et 3.

D'une façon commune à ces deux modes de réalisation de l'installation motrice 1, chaque moteur thermique 20 est un turbomoteur et comporte une chambre de combustion 22 ainsi qu'une turbine de détente 23. Chaque compresseur 21 est muni de deux étages 25,26 de compression afin de comprimer l'air d'admission avant qu'il soit injecté dans la chambre de combustion 22.

Le dispositif de refroidissement 10 est constitué de deux boucles. Une boucle primaire comporte une pompe 11, un premier évaporateur 12, un condenseur 16 ainsi qu'un moyen de compression et d'entrainement 15. Une boucle secondaire comporte un détendeur 13, un second évaporateur 14, le condenseur 16 et le moyen de compression et d'entrainement 15.

Le dispositif de refroidissement 10 comporte également des premières conduites 27 et des secondes conduites 17. Les premières conduites 27 relient le premier étage 25 de compression au premier évaporateur 12, le premier évaporateur 12 au second évaporateur 14 et le second évaporateur 14 au second étage 26 de compression.

Les secondes conduites 17 relient d'une part, dans la boucle primaire, le condenseur 16 à la pompe 11, la pompe 11 au premier évaporateur 12 et le premier évaporateur 12 au moyen de compression et d'entrainement 15 et d'autre part, dans la boucle secondaire, le condenseur 16 au détendeur 13, le détendeur 13 au second évaporateur 14 et le second évaporateur 14 au moyen de compression et d'entrainement 15. Une seconde conduite 17 relie également le moyen de compression et d'entrainement 15 au condenseur 16 afin de fermer la boucle primaire et la boucle secondaire.

Le dispositif de refroidissement 10 forme ainsi une machine thermique tritherme dont la boucle primaire fonctionne selon le cycle de Rankine.

Un fluide frigorifique circule dans le dispositif de refroidissement 10 et plus précisément dans la boucle primaire et la boucle secondaire, traversant l'ensemble des composants 11,12,13,14,15,16 du dispositif de refroidissement 10 ainsi que les secondes conduites 17.

Le condenseur 16 permet de condenser le fluide frigorifique en une phase liquide, en évacuant de l'énergie thermique vers une première source thermique constituée par l'air ambiant environnant l'installation motrice 1. Ensuite, le fluide frigorifique se sépare en deux parties dans les secondes conduites 17.

Dans la boucle primaire, la pompe 11 comprime le fluide frigorifique qui se transforme ensuite en phase gazeuse à haute pression dans le premier évaporateur 12 en absorbant de l'énergie thermique à une seconde source thermique constituée par l'air d'admission sortant du premier étage 25 de compression.

Dans la boucle secondaire, le détendeur 13 détend le fluide frigorifique qui se transforme ensuite en phase gazeuse à basse pression dans le second évaporateur 14 en absorbant de l'énergie thermique à une troisième source thermique constituée par l'air d'admission sortant du premier évaporateur 12.

Le moyen de compression et d'entrainement 15 comprime et entraine le fluide frigorifique circulant dans la boucle secondaire par l'intermédiaire du fluide frigorifique circulant dans la boucle primaire. Ce moyen de compression et d'entrainement 15 mélange également le fluide frigorifique circulant dans les boucles primaire et secondaire avant qu'il soit dirigé vers le condenseur 16.

Enfin, le fluide frigorifique circule de nouveau dans le condenseur 16 et redémarre un nouveau cycle tritherme.

L'air d'admission circule dans le compresseur 21 ainsi que dans le dispositif de refroidissement 10. L'air d'admission traverse successivement les deux évaporateurs 12,14 entre les deux étages 25,26 de compression afin d'une part de vaporiser le fluide frigorifique et d'autre part de refroidir l'air d'admission entre les deux étages 25,26 de compression.

Ce refroidissement de l'air d'admission entre les deux étages 25,26 de compression permet d'augmenter la puissance délivrée par le turbomoteur 20.

Selon le premier mode de réalisation de l'installation motrice 1 représenté sur la figure 2, le moyen de compression et d'entrainement 15 est un éjecteur, par exemple de forme convergente-divergente.

Selon le second mode de réalisation de l'installation motrice 1 représenté sur la figure 3, le moyen de compression et d'entrainement 15 comporte un détendeur volumétrique 18 relié au premier évaporateur 12 par une seconde conduite 17 et un compresseur volumétrique 19 relié au second évaporateur 14 par une seconde conduite 17. Le détendeur volumétrique 18 et le compresseur volumétrique 19 sont solidaires mécaniquement en rotation et reliés par une seconde conduite 17 au condenseur 16. Le détendeur volumétrique 18 est ainsi entrainé en rotation par le fluide frigorifique sortant du premier évaporateur 12, le détendeur volumétrique 18 entrainant en rotation le compresseur volumétrique 19 qui permet alors de comprimer et d'entrainer le fluide frigorifique sortant du second évaporateur 14. Ensuite, le fluide frigorifique venant des boucles primaire et secondaire est mélangé et dirigé vers le condenseur 16.

Selon ce second mode de réalisation de l'installation motrice 1, le dispositif de refroidissement 10 comporte également un arbre de transmission mécanique 32, un moyen d'embrayage 31, une conduite d'entrée 53, un système de ventilation 33 et une quatrième conduite 52.

Le moyen d'embrayage 31 est constitué par un accouplement magnétique solidarisant en rotation le détendeur volumétrique 18 et l'arbre de transmission mécanique 32. Le système de ventilation 33 est solidaire en rotation avec l'arbre de transmission mécanique 32.

La conduite d'entrée 53 et la quatrième conduite 52 sont reliées au condenseur 16. La conduite d'entrée 53 permet de canaliser et de diriger une partie de l'air ambiant environnant l'installation motrice 1 vers le condenseur 16 et la quatrième conduite 52 permet de canaliser l'air ambiant sortant du condenseur 16.

Le système de ventilation 33 permet d'activer la circulation de l'air ambiant dans la conduite d'entrée 53 améliorant ainsi l'efficacité thermique du condenseur 16.

De plus, comme représenté sur la figure 1, la quatrième conduite 52 permet de diriger l'air ambiant sortant du condenseur 16 vers l'habitacle 30 de l'aéronef 2 afin de le chauffer.

Selon ce second mode de réalisation de l'installation motrice 1, le dispositif de refroidissement 10 comporte un séparateur 35 positionné après le condenseur 16 sur une seconde conduite 17. Ce séparateur 35 permet de séparer les phases liquide et gazeuse du fluide frigorifique et ne délivre à sa sortie que la phase liquide du fluide frigorifique. Ainsi, après le séparateur 35, uniquement une phase liquide du fluide frigorifique circule dans les secondes conduites 17 jusqu'à la pompe 11 et le détendeur 13. Cette absence de phase gazeuse dans les secondes conduites 17 est notamment importante pour un fonctionnement efficace de la pompe 11.

Selon ce second mode de réalisation de l'installation motrice 1, l'installation motrice 1 comporte une troisième conduite 51 reliée à une seconde conduite 17 située entre le condenseur 16 et la pompe 11. Cette troisième conduite 51 est également représentée sur la figure 1 et permet de relier la seconde conduite 17 à la boîte de transmission principale de puissance 24 et à un échangeur thermique 50 situé dans l'habitacle 30 de l'aéronef 2.

Le fluide frigorifique circule ainsi dans une troisième conduite 51 depuis une seconde conduite 17, traverse la boîte de transmission principale de puissance 24 et l'échangeur thermique 50 et revient à la seconde conduite 17 par une troisième conduite 51.

Le fluide frigorifique permet ainsi de refroidir la boîte de transmission principale de puissance 24 ainsi que l'habitacle 30 de l'aéronef 2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Installation motrice (1) comportant au moins un compresseur (21), au moins un moteur thermique (20) et un dispositif de refroidissement (10) de l'air d'admission de chaque moteur thermique (20), chaque moteur thermique (20) étant muni d'une chambre de combustion (22), chaque compresseur (21) comportant au moins deux étages (25,26) de compression afin de comprimer ledit air d'admission avant son injection dans ladite chambre de combustion (22) de chaque moteur thermique (20), ledit dispositif de refroidissement (10) comportant un fluide frigorifique, des premières conduites (27) et des secondes conduites (17) ainsi qu'un premier et un second évaporateurs (12,14), une pompe (11), un détendeur (13) et un condenseur (16), lesdites premières conduites (27) reliant un premier étage (25) de compression à un premier évaporateur (12), ledit premier évaporateur (12) à un second évaporateur (14) et ledit second évaporateur (14) à un second étage (26) de compression, lesdites secondes conduites (17) reliant ledit condenseur (16) à ladite pompe (11), ladite pompe (11) audit premier évaporateur (12), ledit condenseur (16) audit détendeur (13) et ledit détendeur (13) audit second évaporateur (14), ledit fluide frigorifique circulant dans lesdites secondes conduites (17) et les composants (11,12,13,14,16) dudit dispositif de refroidissement (10) alors que ledit air d'admission comprimé circule dans lesdites premières conduites (27) et successivement dans lesdits deux évaporateurs (12, 14) afin d'une part de vaporiser ledit fluide frigorifique et d'autre part de refroidir ledit air d'admission comprimé entre lesdits deux étages (25,26) de compression,
**caractérisée en ce que** ledit dispositif de refroidissement (10) est une machine thermique tritherme comportant un moyen de compression et d'entrainement (15), ledit fluide frigorifique circulant dans ledit moyen de compression et d'entrainement (15), lesdites secondes conduites (17) reliant ledit moyen de compression et d'entrainement (15) audit premier évaporateur (12), audit second évaporateur (14) et audit condenseur (16).

2. Installation motrice (1) selon la revendication 1,
**caractérisée en ce que** ledit moyen de compression et d'entrainement (15) est un éjecteur.

3. Installation motrice (1) selon la revendication 1,
**caractérisée en ce que** ledit moyen de compression et d'entrainement (15) comporte un détendeur volumétrique (18) relié audit premier évaporateur (12) par une seconde conduite (17) et un compresseur volumétrique (19) relié audit second évaporateur (14) par une seconde conduite (17), ledit détendeur volumétrique (18) et ledit compresseur volumétrique (19) étant reliés par une seconde conduite (17) audit condenseur (16), ledit détendeur volumétrique (18) et ledit compresseur volumétrique (19) étant solidaires mécaniquement en rotation, ledit détendeur volumétrique (18) étant entrainé en rotation par ledit fluide frigorifique sortant dudit premier évaporateur (12) et ledit fluide frigorifique sortant dudit second évaporateur (14) circulant dans ledit compresseur volumétrique (19).

4. Installation motrice (1) selon la revendication 3,
**caractérisée en ce que**, ledit dispositif de refroidissement (10) comportant un arbre de transmission mécanique (32), ledit détendeur volumétrique (18) est relié mécaniquement en rotation audit arbre de transmission mécanique (32).

5. Installation motrice (1) selon la revendication 4,
**caractérisée en ce que**, ledit dispositif de refroidissement (10) comporte un moyen d'embrayage (31) solidarisant en rotation ledit détendeur volumétrique (18) et ledit arbre de transmission mécanique (32).

6. Installation motrice (1) selon l'une quelconque des revendications 4 à 5,
**caractérisée en ce que** ledit dispositif de refroidissement (10) comporte un système de ventilation (33) dudit condenseur (16), ledit système de ventilation (33) étant solidaire mécaniquement en rotation avec ledit arbre de transmission mécanique (32).

7. Installation motrice (1) selon l'une quelconque des revendications 1 à 6,
**caractérisée en ce que**, ladite installation motrice (1) comportant au moins une troisième conduite (51), ladite troisième conduite (51) est apte à relier une seconde conduite (17) située entre ledit condenseur (16) et ladite pompe (11) à un système complémentaire, ledit fluide frigorifique circulant dans ladite troisième conduite (51) et ledit système complémentaire.

8. Installation motrice (1) selon la revendication 7,
**caractérisée en ce que**, ladite installation motrice (1) comportant au moins une boîte de transmission principale de puissance (24), ledit système complémentaire est ladite boîte de transmission principale de puissance (24), ledit fluide frigorifique circulant dans ladite troisième conduite (51) et ladite boîte de transmission principale de puissance (24) afin de refroidir ladite boîte de transmission principale de puissance (24).

9. Installation motrice (1) selon l'une quelconque des revendications 7 à 8,
**caractérisée en ce que** ladite installation motrice (1) étant destinée à équiper un aéronef (2) à voilure tournante comportant au moins un habitacle (30) et au moins un échangeur thermique (50) destiné à refroidir ledit habitacle (30), ledit système complémentaire est chaque échangeur thermique (50), une troisième conduite (51) étant apte à relier une seconde conduite (17) située entre ledit condenseur (16) et ladite pompe (11) à chaque échangeur thermique (50), ledit fluide frigorifique circulant dans ladite troisième conduite (51) et chaque échangeur thermique (50) afin de refroidir ledit habitacle (30).

10. Installation motrice (1) selon l'une quelconque des revendications 1 à 9,
**caractérisée en ce que** ledit condenseur (16) étant un échangeur thermique entre ledit fluide frigorifique et un fluide secondaire, ladite installation motrice (1) comporte une quatrième conduite (52) reliée audit condenseur (16) afin de canaliser et de diriger ledit fluide secondaire vers un dispositif annexe.

11. Installation motrice (1) selon la revendication 10,
**caractérisée en ce que** ladite installation motrice (1) étant destinée à équiper un aéronef (2) à voilure tournante comportant au moins un habitacle (30), ladite quatrième conduite (52) est apte à canaliser et à diriger ledit fluide secondaire vers ledit habitacle (30) afin de chauffer ledit habitacle (30).

12. Installation motrice (1) selon l'une quelconque des revendications 1 à 11,
**caractérisée en ce que** ledit condenseur (16) est un échangeur thermique entre ledit fluide frigorifique et l'air ambiant environnant ladite installation motrice (1).

13. Procédé de refroidissement de l'air d'admission d'un moteur thermique (20) d'une installation motrice (1),
au cours duquel,
- ledit air d'admission est comprimé dans un compresseur (21) de ladite installation motrice (1) muni de deux étages (25,26) de compression,
- un fluide frigorifique circule dans un dispositif de refroidissement (10) de l'air d'admission comprimé dudit moteur thermique (20), et
- ledit air d'admission comprimé circule successivement dans un premier et un second évaporateurs (12,14) dudit dispositif de refroidissement (10) entre lesdits deux étages (25,26) de compression afin d'une part de vaporiser ledit fluide frigorifique et d'autre part de refroidir ledit air d'admission comprimé,
**caractérisé en ce que**
- l'on condense ledit fluide frigorifique, en échangeant de l'énergie thermique avec une première source thermique,
- on comprime une première partie dudit fluide frigorifique,
- on vaporise ladite première partie dudit fluide frigorifique, en échangeant de l'énergie thermique avec une seconde source thermique, ladite seconde source thermique étant ledit air d'admission comprimé circulant dans ledit premier évaporateur (12),
- on détend une seconde partie dudit fluide frigorifique,
- on vaporise ladite seconde partie dudit fluide frigorifique, en échangeant de l'énergie thermique avec une troisième source thermique, ladite troisième source thermique étant ledit air d'admission comprimé circulant dans ledit second évaporateur (14), et
- on comprime et on entraine ladite seconde partie dudit fluide frigorifique par l'intermédiaire de ladite première partie dudit fluide frigorifique, puis on mélange ladite seconde partie dudit fluide frigorifique et ladite première partie dudit fluide frigorifique.

14. Procédé de refroidissement selon la revendication 13,
**caractérisé en ce que** l'on comprime et que l'on entraine ladite seconde partie dudit fluide frigorifique par l'intermédiaire de ladite première partie dudit fluide frigorifique et que l'on mélange ladite seconde partie dudit fluide frigorifique et ladite première partie dudit fluide frigorifique grâce à un éjecteur.

15. Procédé de refroidissement selon la revendication 13,
**caractérisé en ce que** l'on comprime et que l'on entraine ladite seconde partie dudit fluide frigorifique par l'intermédiaire de ladite première partie dudit fluide frigorifique grâce à un détendeur volumétrique (18) et un compresseur volumétrique (19) solidaires mécaniquement en rotation, ledit détendeur volumétrique (18) étant entrainé en rotation par ladite première partie dudit fluide frigorifique et ladite seconde partie dudit fluide frigorifique circulant dans ledit compresseur volumétrique (19), puis on mélange ladite seconde partie dudit fluide frigorifique et ladite première partie dudit fluide frigorifique.

16. Procédé de refroidissement selon la revendication 15,
**caractérisé en ce que** l'on utilise une partie de l'énergie mécanique disponible au niveau dudit détendeur volumétrique (18), ledit détendeur volumétrique (18) étant relié mécaniquement en rotation à un arbre de transmission mécanique (32).

17. Procédé de refroidissement selon l'une quelconque des revendications 13 à 16,
**caractérisé en ce que** l'on utilise la chaleur évacuée au cours de la condensation dudit fluide frigorifique pour une fonction annexe de chauffage.

18. Procédé de refroidissement selon la revendication 17,
**caractérisé en ce que** ladite fonction annexe de chauffage est le chauffage d'un habitacle (30) dudit aéronef (2).

19. Procédé de refroidissement selon l'une quelconque des revendications 13 à 18,
**caractérisé en ce que** l'on utilise une partie de l'énergie thermique dudit fluide frigorifique pour au moins une fonction complémentaire d'échange thermique.

20. Procédé de refroidissement selon la revendication 19,
**caractérisé en ce que** ladite fonction complémentaire d'échange thermique est le refroidissement d'une boîte de transmission principale de puissance (21) de ladite installation motrice (1).

21. Procédé de refroidissement selon l'une quelconque des revendications 19 à 20,
**caractérisé en ce que**, ledit procédé de refroidissement étant utilisé pour refroidir l'air d'admission comprimé d'un moteur thermique (20) équipant un aéronef (2) à voilure tournante, ladite fonction complémentaire d'échange thermique est le refroidissement d'un habitacle (30) dudit aéronef (2).

## Patentansprüche

1. Antriebsaggregat (1) mit mindestens einem Verdichter (21), mindestens einem Verbrennungsmotor (20) und einer Vorrichtung (10) zum Kühlen der Ansaugluft jedes Verbrennungsmotors (20), wobei jeder Verbrennungsmotor (20) mit einer Brennkammer (22) ausgestattet ist, wobei jeder Verdichter (21) mindestens zwei Verdichtungsstufen (25, 26) zum Verdichten der Ansaugluft vor ihrer Einspritzung in die Brennkammer (22) jedes Verbrennungsmotors (20) aufweist, wobei die Kühlvorrichtung (10) ein Kältemittel, erste Leitungen (27) und zweite Leitungen (17) sowie einen ersten und einen zweiten Verdampfer (12, 14), eine Pumpe (11), eine Expansionseinrichtung (13) und einen Verflüssiger (16) umfasst, wobei die ersten Leitungen (27) eine erste Kompressionsstufe (25) mit einem ersten Verdampfer (12), den ersten Verdampfer (12) mit einem zweiten Verdampfer (14) und den zweiten Verdampfer (14) mit einer zweiten Kompressionsstufe (26) verbinden, wobei die zweiten Leitungen (17) den Verflüssiger (16) mit der Pumpe (11), die Pumpe (11) mit dem ersten Verdampfer (12), den Verflüssiger (16) mit der Expansionseinrichtung (13) und die Expansionseinrichtung (13) mit dem zweiten Verdampfer (14) verbinden, wobei das Kältemittel in den zweiten Leitungen (17) und den Komponenten (11, 12, 13, 14, 16) der Kühleinrichtung (10) strömt, während die komprimierte Ansaugluft in den ersten Leitungen (27) und nacheinander in den beiden Verdampfern (12, 14) strömt, um das Kältemittel zu verdampfen und die komprimierte Ansaugluft zwischen den beiden Kompressionsstufen (25, 26) zu kühlen,
**dadurch gekennzeichnet, dass** die Kühlvorrichtung (10) eine thermische Maschine mit drei Temperaturniveaus ist, die ein Kompressions- und Antriebsmittel (15) aufweist, wobei das Kältemittel in dem Kompressions- und Antriebsmittel (15) fließt, und dass die zweiten Leitungen (17) das Kompressions- und Antriebsmittel (15) mit dem ersten Verdampfer (12), dem zweiten Verdampfer (14) und dem Verflüssiger (16) verbinden.

2. Antriebsaggregat (1) nach Anspruch 1,
**dadurch gekennzeichnet, dass** das Kompressions- und Antriebsmittel (15) eine Strahlpumpe ist.

3. Antriebsaggregat (1) nach Anspruch 1,
**dadurch gekennzeichnet, dass** das Verdichtungs- und Antriebsmittel (15) eine volumetrische Expansionseinrichtung (18), die mit dem ersten Verdampfer (12) über eine zweite Leitung (17) verbunden ist, und einen volumetrischen Verdichter (19) umfasst, der mit dem zweiten Verdampfer (14) über eine zweite Leitung (17) verbunden ist, dass die volumetrische Expansionseinrichtung (18) und der volumetrische Verdichter (19) über eine zweite Leitung (17) mit dem Verflüssiger (16) verbunden sind, dass die volumetrische Expansionseinrichtung (18) und der volumetrische Verdichter (19) drehfest verbunden sind, wobei die volumetrische Expansionseinrichtung (18) durch das Kältemittel, das den ersten Verdampfer (12) verlässt, in Drehung versetzt wird, und das Kältemittel, das den zweiten Verdampfer (14) verlässt, in dem volumetrischen Verdichter (19) fließt.

4. Antriebsaggregat (1) nach Anspruch 3,
**dadurch gekennzeichnet, dass** die Kühlvorrichtung (10) eine mechanische Getriebewelle (32) aufweist und die volumetrische Expansionseinrichtung (18) drehfest mit der mechanischen Getriebewelle (32) verbunden ist.

5. Antriebsaggregat (1) nach Anspruch 4,
**dadurch gekennzeichnet, dass** die Kühlvorrichtung (10) eine Kupplungseinrichtung (31) umfasst, die die volumetrische Expansionseinrichtung (18) und die mechanische Getriebewelle (32) drehfest verbindet.

6. Antriebsaggregat (1) nach einem der Ansprüche 4 bis 5,
**dadurch gekennzeichnet, dass** die Kühlvorrichtung (10) ein Belüftungssystem (33) für den Verflüssiger (16) umfasst, wobei das Belüftungssystem (33) drehfest mit der mechanischen Antriebswelle (32) verbunden ist.

7. Antriebsaggregat (1) nach einem der Ansprüche 1 bis 6,
**dadurch gekennzeichnet, dass** das Antriebsaggregat (1) mindestens eine dritte Leitung (51) umfasst, dass die dritte Leitung (51) eingerichtet ist, um eine zweite Leitung (17) zwischen dem Verflüssiger (16) und der Pumpe (11) mit einem komplementären System zu verbinden, und dass das Kältemittel in der dritten Leitung (51) und dem komplementären System fließt.

8. Antriebsaggregat (1) nach Anspruch 7,
**dadurch gekennzeichnet, dass** das Antriebsaggregat (1) mindestens eine Hauptleistungsgetriebe (24) umfasst, dass das komplementäre System das Hauptleistungsgetriebe (24) ist, und dass das Kältemittel in der dritten Leitung (51) und dem Hauptleistungsgetriebe (24) fließt, um das Hauptleistungsgetriebe (24) zu kühlen.

9. Antriebsaggregat (1) nach einem der Ansprüche 7 bis 8,
**dadurch gekennzeichnet, dass** das Antriebsaggregat (1) vorgesehen ist, um damit ein Drehflügelflugzeug (2) auszustatten, das mindestens einen Fahrgastraum (30) und mindestens einen Wärmetauscher (50) umfasst, der vorgesehen ist, um den Fahrgastraum (30) zu kühlen, dass das komplementäre System jeder Wärmetauscher (50) ist, dass eine dritte Leitung (51) eingerichtet ist, um eine zweite Leitung (17), die sich zwischen dem Verflüssiger (16) und der Pumpe (11) befindet, mit jedem Wärmetauscher (50) zu verbinden, und dass das Kältemittel in dem dritten Rohr (51) und in jedem Wärmetauscher (50) fließt, um den Fahrgastraum (30) zu kühlen.

10. Antriebsaggregat (1) nach einem der Ansprüche 1 bis 9,
**dadurch gekennzeichnet, dass** der Verflüssiger (16) ein Wärmetauscher zwischen dem Kältemittel und einem Sekundärfluid ist, und dass das Antriebsaggregat (1) eine vierte Leitung (52) umfasst, die mit dem Verflüssiger (16) verbunden ist, um das Sekundärfluid zu kanalisieren und zu einer Zusatzvorrichtung zu leiten.

11. Antriebsaggregat (1) nach Anspruch 10,
**dadurch gekennzeichnet, dass** das Antriebsaggregat (1) vorgesehen ist, um damit ein Drehflügelflugzeug (2) mit mindestens einem Fahrgastraum (30) auszustatten, wobei die vierte Leitung (52) in der Lage ist, das Sekundärfluid zu kanalisieren und zum Fahrgastraum (30) zu lenken, um den Fahrgastraum (30) zu heizen.

12. Antriebsaggregat (1) nach einem der Ansprüche 1 bis 11,
**dadurch gekennzeichnet, dass** der Verflüssiger (16) ein Wärmetauscher zwischen dem Kältemittel und der das Antriebsaggregat (1) umgebenden Umgebungsluft ist.

13. Verfahren zum Kühlen der Ansaugluft eines Verbrennungsmotors (20) eines Antriebsaggregats (1), in welchem
- die Ansaugluft in einem Verdichter (21) des Antriebsaggregats (1) komprimiert wird, der mit zwei Verdichtungsstufen (25, 26) versehen ist,
- ein Kältemittel in einer Kühlvorrichtung (10) für die komprimierte Ansaugluft des Verbrennungsmotors (20) fließt, und
- die komprimierte Ansaugluft nacheinander in einem ersten und einem zweiten Verdampfer (12, 14) der Kühlvorrichtung (10) zwischen den beiden Verdichtungsstufen (25, 26) fließt, um einerseits das Kältemittel zu verdampfen und andererseits die komprimierte Ansaugluft zu kühlen,
**dadurch gekennzeichnet, dass**
- das Kältemittel durch Austausch von Wärmeenergie mit einer ersten Wärmequelle kondensiert wird,
- ein erster Teil des Kältemittels komprimiert wird,
- der erste Teil des Kältemittels durch Austausch von Wärmeenergie mit einer zweiten Wärmequelle verdampft wird, wobei die zweite Wärmequelle die komprimierte Ansaugluft ist, die in dem ersten Verdampfer (12) zirkuliert,
- ein zweiter Teil des Kältemittels expandiert wird,
- der zweite Teil des Kältemittels durch Austausch von Wärmeenergie mit einer dritten Wärmequelle verdampft wird, wobei die dritte Wärmequelle die komprimierte Ansaugluft ist, die in dem zweiten Verdampfer (14) zirkuliert, und
- der zweite Teil des Kältemittels komprimiert und durch den ersten Teil des Kältemittels angetrieben wird, und dann der zweite Teil des Kältemittels mit dem ersten Teil des Kältemittels vermischt wird.

14. Kühlverfahren nach Anspruch 13,
**dadurch gekennzeichnet, dass** der zweite Teil des Kältemittels komprimiert und durch den ersten Teil des Kältemittels angetrieben wird, und dass der zweite Teil des Kältemittels und der erste Teil des Kältemittels durch eine Strahlpumpe gemischt werden.

15. Kühlverfahren nach Anspruch 13,
**dadurch gekennzeichnet, dass** der zweite Teil des Kältemittels komprimiert und angetrieben wird durch den ersten Teil des Kältemittels mittels einer volumetrischen Expansionseinrichtung (18) und eines volumetrischen Verdichters (19), die drehfest verbunden sind, wobei die volumetrische Expansionseinrichtung (18) durch den ersten Teil des Kältemittels drehangetrieben wird, und der zweite Teil des Kältemittels in dem volumetrischen Verdichter (19) fließt, und dass dann der zweite Teil des Kältemittels und der erste Teil des Kältemittels gemischt werden.

16. Kühlverfahren nach Anspruch 15,
**dadurch gekennzeichnet, dass** ein Teil der an der volumetrischen Expansionseinrichtung (18) verfügbaren mechanischen Energie verwendet wird, wobei die volumetrische Expansionseinrichtung (18) drehfest mit einer mechanischen Getriebewelle (32) verbunden ist.

17. Kühlverfahren nach einem der Ansprüche 13 bis 16,
**dadurch gekennzeichnet, dass** die während der Kondensation des Kältemittels abgeführte Wärme für eine Zusatzheizfunktion verwendet wird.

18. Kühlverfahren nach Anspruch 17,
**dadurch gekennzeichnet, dass** die Zusatzheizfunktion die Heizung eines Fahrgastraums (30) des Flugzeugs (2) ist.

19. Kühlverfahren nach einem der Ansprüche 13 bis 18,
**dadurch gekennzeichnet, dass** ein Teil der Wärmeenergie des Kältemittels für mindestens eine komplementäre Wärmeaustauschfunktion verwendet wird.

20. Kühlverfahren nach Anspruch 19,
**dadurch gekennzeichnet, dass** die komplementäre Wärmeaustauschfunktion die Kühlung eines Hauptleistungsgetriebes (21) des Antriebsaggregats (1) ist.

21. Kühlverfahren nach einem der Ansprüche 19 bis 20,
**dadurch gekennzeichnet, dass** das Kühlverfahren verwendet wird, um die komprimierte Ansaugluft eines Verbrennungsmotors (20) zu kühlen, mit dem ein Drehflügelflugzeug (2) ausstattet ist, und dass die komplementäre Wärmeaustauschfunktion die Kühlung eines Fahrgastraums (30) des Flugzeugs (2) ist.

## Claims

1. Power plant (1) comprising at least one compressor (21), at least one heat engine (20) and a device (10) for cooling the intake air of each heat engine (20), each heat engine (20) being provided with a combustion chamber (22), each compressor (21) comprising at least two compression stages (25, 26) for compressing said intake air prior to the injection thereof into said combustion chamber (22) of each heat engine (20), said cooling device (10) comprising a refrigerant, first pipes (27) and second pipes (17), as well as a first and a second evaporator (12, 14), a pump (11), an expander (13) and a condenser (16), said first pipes (27) connecting a first compression stage (25) to a first evaporator (12), said first evaporator (12) to a second evaporator (14), and said second evaporator (14) to a second compression stage (26), said second pipes (17) connecting said condenser (16) to said pump (11), said pump (11) to said first evaporator (12), said condenser (16) to said expander (13), and said expander (13) to said second evaporator (14), said refrigerant flowing in said second pipes (17) and the components (11, 12, 13, 14, 16) of said cooling device (10) while said compressed intake air flows in said first pipes (27) and consecutively in said two evaporators (12, 14) in order to vaporise said refrigerant and to cool said compressed intake air between said two compression stages (25, 26),
**characterised in that** said cooling device (10) is a tri-thermal heat machine comprising a compression and drive means (15), said refrigerant flowing in said compression and drive means (15), said second pipes (17) connecting said compression and drive means (15) to said first evaporator (12), said second evaporator (14) and said condenser (16).

2. Power plant (1) according to claim 1,
**characterised in that** said compression and drive means (15) is an ejector.

3. Power plant (1) according to claim 1,
**characterised in that** said compression and drive means (15) comprises a positive-displacement expander (18) connected to said first evaporator (12) by a second pipe (17), and a positive-displacement compressor (19) connected to said second evaporator (14) by a second pipe (17), said positive-displacement expander (18) and said positive-displacement compressor (19) being connected by a second pipe (17) to said condenser (16), said positive-displacement expander (18) and said positive-displacement compressor (19) being mechanically connected for conjoint rotation, said positive-displacement expander (18) being rotated by said refrigerant leaving said first evaporator (12), and said refrigerant leaving said second evaporator (14) flowing in said positive-displacement compressor (19).

4. Power plant (1) according to claim 3,
**characterised in that**, said cooling device (10) comprising a mechanical transmission shaft (32), said positive-displacement expander (18) is mechanically rotationally connected to said mechanical transmission shaft (32).

5. Power plant (1) according to claim 4,
**characterised in that** said cooling device (10) comprises a clutch means (31) that connects said positive-displacement expander (18) and said mechanical transmission shaft (32) for conjoint rotation.

6. Power plant (1) according to either claim 4 or claim 5,
**characterised in that** said cooling device (10) comprises a system (33) for ventilating said condenser (16), said ventilation system (33) being mechanically connected to said mechanical transmission shaft (32) for conjoint rotation.

7. Power plant (1) according to any of claims 1 to 6,
**characterised in that**, said power plant (1) comprising at least a third pipe (51), said third pipe (51) is suitable for connecting a second pipe (17) located between said condenser (16) and said pump (11) to an additional system, said refrigerant flowing in said third pipe (51) and said additional system.

8. Power plant (1) according to claim 7,
**characterised in that**, said power plant (1) comprising at least one main power transmission gearbox (24), said additional system is said main power transmission gearbox (24), said refrigerant flowing in said third pipe (51) and said main power transmission gearbox (24) in order to cool said main power transmission gearbox (24).

9. Power plant (1) according to either claim 7 or claim 8,
**characterised in that**, said power plant (1) being intended to be mounted in a rotary wing aircraft (2) comprising at least one passenger compartment (30) and at least one heat exchanger (50) for cooling said passenger compartment (30), said additional system is each heat exchanger (50), a third pipe (51) being suitable for connecting a second pipe (17) located between said condenser (16) and said pump (11) to each heat exchanger (50), said refrigerant flowing in said third pipe (51) and each heat exchanger (50) in order to cool said passenger compartment (30).

10. Power plant (1) according to any of claims 1 to 9,
**characterised in that**, said condenser (16) being a heat exchanger for heat exchange between said refrigerant and a secondary fluid, said power plant (1) comprises a fourth pipe (52) connected to said condenser (16) in order to channel and direct said secondary fluid to an ancillary device.

11. Power plant (1) according to claim 10,
**characterised in that**, said power plant (1) being intended to be mounted in a rotary wing aircraft (2) comprising at least one passenger compartment (30), said fourth pipe (52) is suitable for channelling and directing said secondary fluid to said passenger compartment (30) in order to heat said passenger compartment (30).

12. Power plant (1) according to any of claims 1 to 11,
**characterised in that** said condenser (16) is a heat exchanger for heat exchange between said refrigerant and the ambient air surrounding said power plant (1).

13. Method for cooling the intake air of a heat engine (20) of a power plant (1),
in which
- said intake air is compressed in a compressor (21) of said power plant (1) provided with two compression stages (25, 26),
- a refrigerant flows in a device (10) for cooling the compressed intake air of said heat engine (20), and
- said compressed intake air flows consecutively in a first and a second evaporator (12, 14) of said cooling device (10) between said two compression stages (25, 26) in order to vaporise said refrigerant and to cool said compressed intake air,
**characterised in that**
- said refrigerant is condensed by exchanging thermal energy with a first heat source,
- a first portion of said refrigerant is compressed,
- said first portion of said refrigerant is vaporised by exchanging thermal energy with a second heat source, said second heat source being said compressed intake air flowing in said first evaporator (12),
- a second portion of said refrigerant is expanded,
- said second portion of said refrigerant is vaporised by exchanging thermal energy with a third heat source, said third heat source being said compressed intake air flowing in said second evaporator (14), and
- said second portion of said refrigerant is compressed and driven by means of said first portion of said refrigerant, and then said second portion of said refrigerant and said first portion of said refrigerant are mixed.

14. Cooling method according to claim 13,
**characterised in that** said second portion of said refrigerant is compressed and driven by means of said first portion of said refrigerant, and **in that** said second portion of said refrigerant and said first portion of said refrigerant are mixed using an ejector.

15. Cooling method according to claim 13,
**characterised in that** said second portion of said refrigerant is compressed and driven by means of said first portion of said refrigerant using a positive-displacement expander (18) and a positive-displacement compressor (19) which are mechanically connected for conjoint rotation, said positive-displacement expander (18) being rotated by said first portion of said refrigerant and said second portion of said refrigerant flowing in said positive-displacement compressor (19), and then said second portion of said refrigerant and said first portion of said refrigerant being mixed.

16. Cooling method according to claim 15,
**characterised in that** some of the mechanical energy available at said positive-displacement expander (18) is used, said positive-displacement expander (18) being mechanically rotationally connected to a mechanical transmission shaft (32).

17. Cooling method according to any of claims 13 to 16,
**characterised in that** the heat discharged during the condensation of said refrigerant is used for an auxiliary heating function.

18. Cooling method according to claim 17,
**characterised in that** said auxiliary heating function is that of heating a passenger compartment (30) of said aircraft (2).

19. Cooling method according to any of claims 13 to 18,
**characterised in that** some of the thermal energy of said refrigerant is used for at least one additional heat exchange function.

20. Cooling method according to claim 19,
**characterised in that** said additional heat exchange function is that of cooling a main power transmission gearbox (21) of said power plant (1).

21. Cooling method according to either claim 19 or claim 20,
**characterised in that**, said cooling method being used to cool the compressed intake air of a heat engine (20) mounted in a rotary wing aircraft (2), said additional heat exchange function is that of cooling a passenger compartment (30) of said aircraft (2).
